# EUROPÄISCHE PATENTSCHRIFT

(11) **EP 1 173 315 B1**
(45) Veröffentlichungstag und Bekanntmachung des Hinweises auf die Patenterteilung: **19.03.2003**
(21) Anmeldenummer: 00918553.9
(22) Anmeldetag: 08.04.2000
(51) Int. Cl.: B29B 17/00, B29C 47/10, B02C 13/18

(54) **VORRICHTUNG ZUM KONTINUIERLICHEN RECYCLEN VON KUNSTSTOFFMATERIAL, VORZUGSWEISE POLYESTER**
DEVICE FOR CONTINUOUSLY RECYCLING SYNTHETIC MATERIAL, PREFERABLY POLYESTER
DISPOSITIF DE RECYCLAGE CONTINU DE MATIERE PLASTIQUE, DE PREFERENCE DE POLYESTER

(30) Priorität: 23.04.1999 AT 72499
(43) Veröffentlichungstag der Anmeldung: 23.01.2002
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT0000083
(87) Internationale Veröffentlichungsnummer: WO00064654

(56) Entgegenhaltungen:
- EP-A- 0 496 080
- WO-A-93/18902
- WO-A-93/22119
- CH-A- 630 816
- US-A- 3 239 882

## Beschreibung

Die Erfindung bezieht sich auf eine Vorrichtung zum kontinuierlichen Recyclen von Kunststoffmaterial, vorzugsweise Polyester, mit einem ersten Aufnahmebehälter für das Material, in welchem das Material zerkleinernde und/oder mischende, bewegte Werkzeuge angeordnet sind, und aus welchem das so bearbeitete Material durch einen vakuumdicht abschließbaren Kanal in einen zweiten Aufnahmebehälter transportiert wird, an dessen Innenraum eine Evakuiereinrichtung angeschlossen ist und in welchem ebenfalls bewegte Werkzeuge für die Bearbeitung des Materiales vorgesehen sind, wobei das Material aus dem zweiten Aufnahmebehälter mittels einer Schnecke abtransportiert wird.

Eine Vorrichtung der eingangs geschilderten Art ist bekannt (AT 396.900 B). Dort wird das Material im ersten Aufnahmebehälter zerkleinert und gemischt und von den umlaufenden Werkzeugen in den zum zweiten Behälter führenden Kanal eingedrückt. Der zweite Behälter steht unter Vakuum, um das im erwärmten Zustand gegen Luftzutritt empfindliche Material zu schützen und die Trocknungszeit zu verringern. Das im Kanal zum zweiten Aufnahmebehälter strömende vorbehandelte Kunststoffmaterial wirkt zwar weitgehend dicht, kann aber nicht völlig den Zustrom von Luft aus dem ersten Behälter in den zweiten Behälter verhindem. Ein völlig dichter Abschluss des zweiten Behälters ist zwar durch ein im Kanal angeordnetes Absperrorgan möglich, aber dann ist ein kontinuierlicher Betrieb der Vorrichtung nicht mehr möglich.

Die Erfindung setzt sich zur Aufgabe, eine Vorrichtung der eingangs geschilderten Art so zu verbessem, dass ein kontinuierlicher Betrieb bei ausreichender Vakuumdichtheit des zweiten Aufnahmebehälters möglich ist. Auf diese Weise soll das bearbeitete Material geschont werden, insbesondere ein Abbau der Molekülketten nach Möglichkeit verhindert werden. Die Erfindung löst diese Aufgabe dadurch, dass im Kanal eine Schnecke gelagert ist, deren Schneckengänge das Material aus dem ersten Aufnahmebehälter in den zweiten Aufnahmebehälter fördern, wobei zwischen diesen Schneckengängen und dem zweiten Aufnahmebehälter zumindest ein im Fluss des geförderten Materiales liegendes Stauelement im Kanal vorhanden ist. Dieses Stauelement bildet für das Kunststoffmaterial eine intensive Kompressionszone, die ausreichend vakuumdichtend wirkt, ohne den kontinuierlichen Betrieb der Vorrichtung zu behindern.

Die Anordnung einer Schnecke in einem Kanal, der zwei in Flussrichtung des behandelten Materiales hintereinanderliegende Kammern verbindendet, ist an sich bekannt (AT E 128.898 T). Bei dieser bekannten Vorrichtung steht jedoch die zweite Kammer nicht unter Vakuum und die Vorrichtung arbeitet nicht kontinuierlich, da die Schnecke nur dann in Gang gesetzt wird, wenn in der ersten Kammer vorbestimmte Materialbedingungen erreicht sind. Die Behandlung von gegen Luft empfindlichem Material, insbesondere Polyester, ist daher mit dieser bekannten Vorrichtung nicht zielführend möglich.

Besondere Vorteile ergeben sich im Rahmen der Erfindung dann, wenn die Schnecke eine Agglomerierschnecke ist, da auf diese Weise das besonders empfindliche, agglomerierte Kunststoffmaterial, insbesondere Polyester, mit guter Qualität erhältlich ist. Zum Unterschied von Vorrichtungen, welche das Material plastifizieren, wird bei einer Agglomeriervorrichtung dem zu behandelnden Kunststoffgut, das zumeist in vorzerkleinerter Form in die Einbringeöffnung des Gehäuses der Agglomerierschnecke eingebracht wird, nur soviel Energie zugeführt, dass die Teilchen des Kunststoffmateriales lediglich leicht zusammenbacken, aber nicht plastifiziert werden. Es findet also gleichsam ein Haften der einzelnen Kunststoffteilchen aneinander bzw. eine Sinterung des Kunststoffmateriales statt und es wird daher möglichst loses Material dem zweiten Behälter zugeführt.

Wie bekannt, ist bei einer Agglomerierschnecke das Verhältnis von wirksamer Schneckenlänge zu Nenndurchmesser der Schnecke kleiner als 16. Im Rahmen der Erfindung besonders günstige Werte für dieses Verhältnis liegen zwischen 4,5 und 12. Als "wirksame Länge" der Agglomerierschnecke wird hiebei jene Distanz verstanden, welche zwischen dem ausgangsseitigen Ende der Schnecke und dem diesem Ende benachbarten Rand der Einbringeöffnung liegt, durch welche das Material in das Gehäuse der Schnecke eingebracht wird. Weiters sind bei einer Agglomerierschnecke die Schneckengänge in der Ausstoßzone (d.i. die der Austrittsöffnung für das Material benachbarte Zone) tiefer geschnitten als bei einer Plastifizierschnecke. Bei letzterer beträgt üblicherweise das Verhältnis von Gangtiefe zu Schneckenaußendurchmesser etwa 0,05 bis 0,08, wogegen bei einer Agglomerierschnecke dieses Verhältnis in der Regel etwa 0,1 bis 0,12 beträgt.

Stauelemente im Sinne der Erfindung lassen sich auf verschiedene Weise baulich einfach realisieren: Gemäß einer bevorzugten Ausführungsform der Erfindung ist das Stauelement von Schneckengängen gebildet, deren Steigungsrichtung jener der Schneckengänge der Schnecke entgegengesetzt gerichtet ist. Diese entgegengesetzt gerichteten Schneckengänge erzeugen daher eine Förderwirkung, welche jener der Schnecke entgegen wirkt, durch letztere jedoch überwunden wird. Auf diese Weise entsteht ein Stau des behandelten Materiales im Bereich dieser Gegenschnecke. Die zuvor erwähnte Wirkung lässt sich in konstruktiv einfacher Weise dadurch sicherstellen, dass - in axialer Richtung des Kanales gemessen - die Schnecke länger ist als die entgegengesetzt gerichteten Schneckengänge und/oder dass die Schneckengänge der Schnecke tiefer geschnitten sind als die entgegengesetzt gerichteten Schneckengänge.

Eine andere, besonders günstige, Bauweise für das Stauelement besteht im Rahmen der Erfindung darin, dass das Stauelement von einem eine quer, vorzugsweise normal, zur Fließrichtung des Materiales angeordnete Rippe tragenden Bauteil gebildet ist. Ein solcher Bauteil wirkt in ähnlicher Weise stauend auf das von der Schnecke geförderte Material, insbesondere dann, wenn zwei oder mehr Rippen vorhanden sind. Es ist hiebei zur Erzielung günstiger Strömungsverhältnisse zweckmäßig, zumindest zwei in Förderrichtung des Materiales aufeinanderfolgende Rippen mit abgerundetem Profil vorzusehen.

Die erwähnte Gegenschnecke kann durch einen gesonderten Antrieb so verdreht werden, dass die gewünschte Förderrichtung (entgegengesetzt jener der Schnecke) erreicht wird. Wird jedoch das Stauelement im Rahmen der Erfindung drehschlüssig mit der Schnecke verbunden, so kann ein solcher gesonderter Antrieb entfallen, wenn nur die Schneckengänge der entgegengesetzt wirkenden Gegenschnecke entsprechend gerichtet sind. Ein mit Rippen ausgebildeter Staubauteil kann ortsfest im Kanal angeordnet sein, es ist jedoch zweckmäßig, auch ein solches Stauelement zu verdrehen, insbesondere durch drehschlüssige Verbindung mit der Schnecke, da auf diese Weise eine Abstützung des Stauelementes relativ zu den Kanalwänden entfällt.

Am ausgangsseitigen Ende ist das Stauelement zweckmäßig zugespitzt, um den an seinem Umfang bzw. entlang seiner Schneckengänge strömenden Materialstrom wieder zusammenzuführen. Wenn der Kanal, was im Rahmen der Erfindung besonders zweckmäßig ist, außermittig, gegebenenfalls tangential, an die Wand des zweiten Aufnahmebehälters angeschlossen ist, dann besteht eine besonders günstige Ausführungsform im Rahmen der Erfindung darin, das Profil der Zuspitzung des Stauelementes im wesentlichen dem Profil der Wand des zweiten Aufnahmebehälters im Bereich des Anschlusses des Kanals folgen zu lassen. Dies gewährleistet möglichst glatte Verhältnisse an der Innenwand des zweiten Aufnahmebehälters, in welchem ja das Material durch die umlaufenden Werkzeuge im Kreis bewegt wird. Die so entstehende Mischtrombe wird durch die beschriebene Bauweise nicht gestört.

Aus Montage- und Wartungsgründen ist es zweckmäßig, das Stauelement in einem einen eigenen Abschnitt des Kanals bildenden Gehäusebauteil anzuordnen, der mit dem Gehäuse der Schnecke lösbar, jedoch dicht, verbunden ist. Die dichte Verbindung ist erforderlich, um die im Bereiche des Kanals auftretenden hohen Drücke, welche 300 bar und mehr erreichen können, verlustfrei aufnehmen zu können. Wenn das Stauelement von einem Rippen tragenden Bauteil gebildet ist, dann ist es im Rahmen der Erfindung zweckmäßig, die Gangtiefe der Schneckengänge der Agglomerierschnecke größer zu bemessen als die in radialer Richtung gemessene kleinste Abmessung des Spaltes zwischen dem Umfang der Rippen des Stauelementes und der Innenwand des Kanales. Wie ersichtlich, braucht also das Stauelement nicht radialsymmetrisch zur Achse des Kanals ausgebildet zu sein, es kann vielmehr auch in der Form eines Zahnrades ausgebildet sein, wobei das Material vorwiegend durch die Zahnlücken am Stauelement vorbeiströmt.

Wie bereits erwähnt, sind einzelne zu recyclende Materialien, insbesondere Polyester, im erwärmten Zustand sehr feuchtigkeitsempfindlich. Um zu vermeiden, dass solches behandeltes Material im ersten Aufnahmebehälter durch seine Bearbeitung geschädigt wird, ist im Rahmen der Erfindung auch der erste Aufnahmebehälter vakuumdicht abschließbar und an eine Evakuiereinrichtung angeschlossen. Der dichte Abschluss der Füllungsöffnung dieses Aufnahmebehälters kann durch eine im wesentlichen kontinuierlich arbeitende Schleuse, etwa eine Zellenradschleuse od.dgl., erzielt werden, um eine kontinuierliche Befüllung dieses Behälters zu ermöglichen.

In der Regel liegt die Einzugsöffnung des Gehäuses der Schnecke, welche das behandelte Material aus dem zweiten Aufnahmebehälter abführt, zumindest annähemd auf der Höhe der in diesem Aufnahmebehälter umlaufenden Werkzeuge, um die von diesen Werkzeugen auf das Material ausgeübte Fliehkraftwirkung sowie eine spachtelartige, von den Werkzeugen hervorgerufene Eindrückung des Materials bestmöglich auszunützen. Bei einer solchen Bauweise ist es aber im Rahmen der Erfindung zweckmäßig, die Mündung des Kanales in den zweiten Aufnahmebehälter höher zu legen als die Umlaufbahn im Bodenbereich dieses Aufnahmebehälters um zumindest eine vertikale Achse umlaufender Werkzeuge. Dies deswegen, um zu vermeiden, dass im ersten Behälter mangelhaft vorbearbeitete Gutteilchen beim Eintritt in den zweiten Aufnahmebehälter durch die umlaufenden Werkzeuge unmittelbar in das Gehäuse der Austragschnecke eingebracht werden und somit nicht lange genug im zweiten Aufnahmebehälter verbleiben. Dort ist aber eine bestimmte Verweilzeit aus Gründen der ausreichenden Trockung feuchter oder feuchtigkeitshaltiger Teilcher erwünscht. Die beschriebene erhöhte Anordnung der Einbringeöffnung im zweiten Aufnahmebehälter bewirkt nun, dass die in den zweiten Aufnahmebehälter eintretenden Materialteilchen durch die von den im Behälter umlaufenden Werkzeugen erzeugte Gutströmung mitgenommen werden. Diese Gutströmung bewirkt ein Hochsteigen der Teilchen an der Behälterwand, sodass die in diesen Aufnahmebehälter eintretenden Teilchen zunächst hochgerissen werden und erst dann - nach einer gewissen Verweilzeit - in den Bereich der Einzugsöffnung der Austragsschnecke gelangen können. Dies trägt dem Wunsch Rechnung, die möglichst losen Teilchen im zweiten Behälter möglichst lang unter erhöhter Temperatur und unter Vakuum zu halten. Die zerkleinemde Einwirkung auf die in den zweiten Behälter eintretenden, zum Teil zusammengebackten Teilchen wird im Rahmen der Erfindung begünstigt, wenn zusätzlich zu den im Bodenbereich des zweiten Aufnahmebehälters umlaufenden Werkzeugen weitere, vorzugsweise gleichachsig angeordnete Werkzeuge, insbesondere Schlagelemente, vorgesehen sind, deren Umlaufbahn höher liegt als jene der im Bodenbereich des Aufnahmebehälters angeordneten Werkzeuge. Zweckmäßig liegt die Umlaufbahn dieser weiteren Werkzeuge auf der Höhe der Mündung des Kanales in den zweiten Aufnahmebehälter.

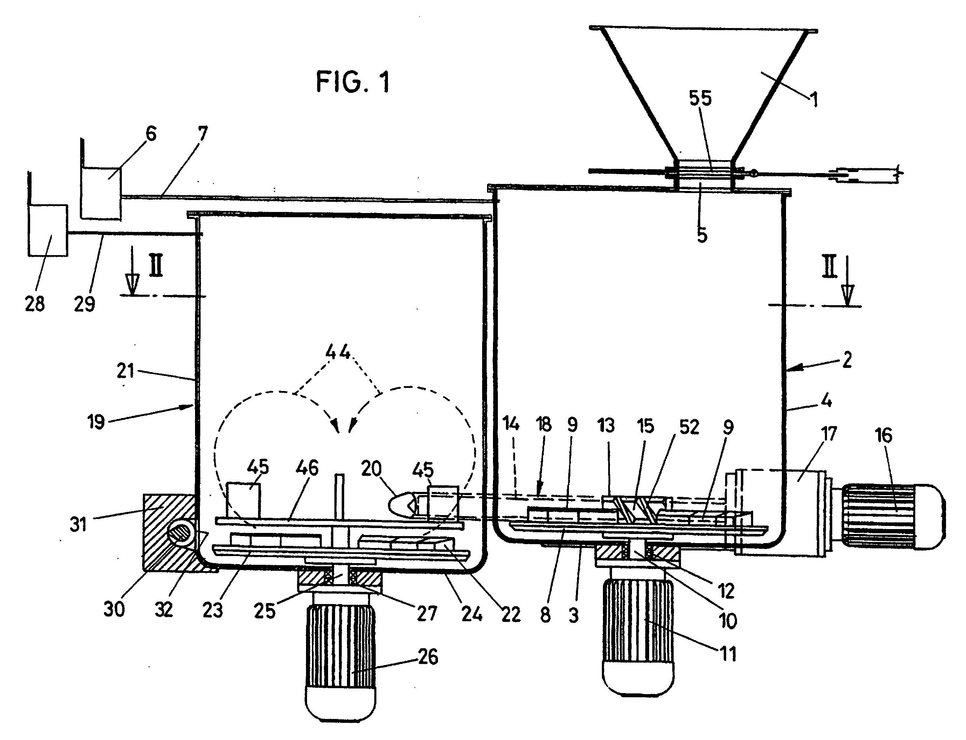

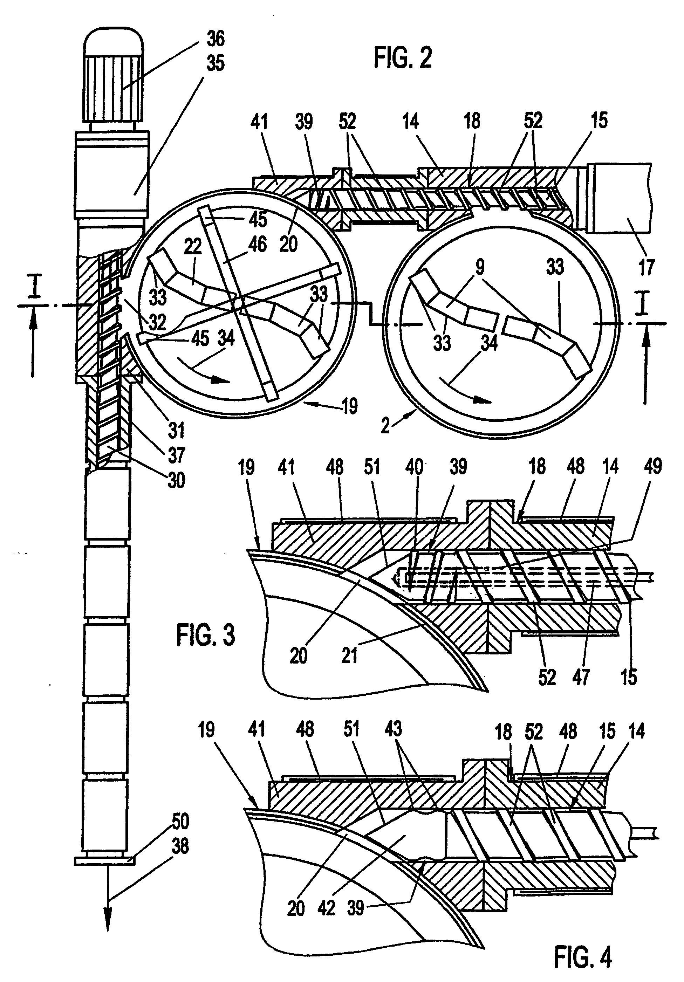

Weitere Kennzeichen und Vorteile der Erfindung ergeben sich aus der Beschreibung von Ausführungsbeispielen des Erfindungsgegenstandes, welche in der Zeichnung schematisch dargestellt sind. Fig. 1 zeigt einen Vertikalschnitt durch die Vorrichtung entlang der Linie I-I der Fig. 2, die ihrerseits einen Schnitt nach der Linie II-II der Fig. 1 darstellt. Fig. 3 zeigt im Horizontalschnitt und in größerem Maßstab die Ausbildung des Stauelementes als Gegenschnecke und Fig. 4 zeigt in ähnlicher Weise eine Ausführungsvariante hiezu.

Bei der Ausführungsform nach den Fig. 1, 2 und 3 wird das zu behandelnde Material, z.B. Polyester, aber gegebenenfalls auch Polyamide und andere hygroskopisch empfindliche bzw. gegen Sauerstoff empfindliche Kunststoffe, durch einen Einfülltrichter 1 in den ersten Aufnahmebehälter 2 eingebracht, der rotationssymmetrisch zu einer lotrechten Achse sowie mit einem ebenen, horizontalen Boden 3 und vertikalen Seitenwänden 4 ausgebildet ist. Um das im Behälter 2 befindliche Material unter Vakuum bearbeiten zu können, ist die Einbringeöffnung 5 durch einen Absperrschieber 55 vakuumdicht abschließbar. Zur Evakuierung des Behälters 2 dient eine Evakuiereinrichtung 6, bei der eine Vakuumpumpe über eine Leitung 7 an den Behälter 2 angeschlossen ist. Im Behälter 2 laufen in seinem Bodenbereich auf einer Scheibe 8 montierte Werkzeuge 9 um die vertikale Behälterachse um, welche über eine Welle 10 von einem Motor 11 zur Drehbewegung angetrieben werden. Die Welle 10 durchsetzt den Boden 3 des Behälters 2 und ist durch eine Dichtung 12 vakuumdicht abgedichtet. In der Seitenwand 4 des Behälters 2 ist eine Öffnung 13 vorgesehen, durch welche das im Behälter 2 bearbeitete Material in das Gehäuse 14 einer Schnecke 15 gelangt. Hiefür wird die von den umlaufenden Werkzeugen 9 auf das im Behälter 2 befindliche Material ausgeübte Fliehkraftwirkung ausgenützt, zusätzlich können die Werkzeuge 9 spachtelartig das Material in die Öffnung 13 eindrücken. Die Schnecke 15 ist zweckmäßig, jedoch nicht zwingend, als Agglomerierschnecke ausgebildet, d.h. die Gangtiefe der Schneckengänge 52 ist im Bereich der Ausstoßzone, also im Bereich der Mündung des Gehäuses 14, größer als bei einer üblichen Plastifizierschnecke und das Verhältnis der wirksamen Länge der Agglomerierschnecke zu ihrem Nenndurchmesser beträgt weniger als 16, vorzugsweise liegt dieses Verhältnis zwischen 4,5 und 12. Im dargestellten Ausführungsbeispiel beträgt dieses Verhältnis etwa 6,6. Wie Fig. 2 zeigt, hat die Schnecke 15 zumindest über einen Teil ihrer axialen Länge einen sich in Förderrichtung stetig vergrößernden Kemdurchmesser, also eine sich in dieser Richtung verringemde Tiefe ihrer Schneckengänge 52, um in Förderrichtung den Druck auf das von der Schnecke geführte Material zu erhöhen. Die Schnecke wird von einem Motor 16 über ein Getriebe 17 zur Drehbewegung um ihre Achse angetrieben. Das Gehäuse 14 der Schnecke bildet einen Kanal 18, über welchen das Material vom ersten Aufnahmebehälter 2 in einen zweiten Aufnahmebehälter 19 durch die Schnecke 15 gefördert wird. Die in der vertikalen Seitenwand 21 des Behälters 19 angeordnete Mündung 20 des Kanales 18 bildet die Einbringeöffnung für das vorbehandelte Material und liegt höher als die Umlaufbahn im zweiten Aufnahmebehälter 19 um dessen vertikale Achse umlaufender Werkzeuge 22. Diese sind in ähnlicher Weise wie beim ersten Aufnahmebehälter 2 auf einer Scheibe 23 montiert, die über eine den Boden 24 des Behälters 19 durchsetzende Welle 25 von einem Motor zur Drehbewegung angetrieben wird. Eine Dichtung 27 dichtet die Welle 25 vakuumdicht gegen den Boden 24 ab. Um auch im Behälter 19 das in ihm befindliche Material unter Vakuum bearbeiten zu können, ist auch dieser Behälter 19 evakuierbar, hiezu dient eine Evakuiereinrichtung 28, deren Vakuumpumpe über eine Leitung 29 an den Behälter 19 angeschlossen ist.

Der Austrag des fertig bearbeiteten Materiales aus dem zweiten Aufnahmebehälter 19 erfolgt durch eine an ihn tangential angeschlossene Schnecke 30, in deren Gehäuse 31 das Material aus dem Behälter 19 unter Einwirkung der von den Werkzeugen 22 auf das Material ausgeübten Fliehkraft durch eine Öffnung 32 eingedrückt wird. Wie beim Behälter 2, kann auch hier diese Eindrückung durch eine spachtelartige Wirkung der Werkzeuge 22 unterstützt werden, hiefür sind die Werkzeuge 9, 22 jeweils mit Arbeitskanten 33 (Fig. 2) versehen, die in bezug auf die Radialrichtung entgegengesetzt der Umlaufrichtung (Pfeile 34) abgewinkelt sind. Die Schnecke 30 wird über ein Getriebe 35 von einem Motor 36 angetrieben. Ihr Gehäuse 30 ist zweckmäßig außen mit Widerstandsheizungen 37 versehen, um das von der Schnecke 30 transportierte Material auf der gewünschten Temperatur halten zu können. Die Förderrichtung der Schnecke 30 ist durch einen Pfeil 38 angedeutet.

An ihrem der Mündung 20 benachbarten Ende der Schnecke 15 liegt im Kanal 18 ein Stauelement 39 für das von der Schnecke 15 geförderte Material, sodass der Druck auf das Material über die axiale Länge des Stauelementes 39 erhöht wird. Diese axiale Länge ist im Vergleich zur axialen Länge der Schnecke 15 gering, im dargestellten Ausführungsbeispiel etwa ein Achtel der letzteren. Dieser auf das Material wirkende erhöhte Druck bewirkt, dass der Kanal 18 verlässlich vakuumdicht abgedichtet wird, sodass auch dann, wenn im ersten Behälter 2 das Vakuum - aus welchen Gründen immer - aufgehoben wird, das Vakuum im zweiten Behälter 19 unverändert aufrechterhalten bleibt. Dies ist wichtig, um im Falle der Verarbeitung im erwärmten Zustand feuchtigkeitsempfindlicher bzw. sauerstoffempfindlicher Kunststoffteilchen, etwa aus Polyester bzw. Polyamid, z.B. zur Erzeugung von Agglomerat, optimale Arbeitsbedingungen im Behälter 19 aufrechterhalten zu können.

Bei der in den Fig. 1 - 3 dargestellten Ausführungsform ist das Stauelement 39 von am Austragsende des Bauteiles, welcher die Schnecke 15 bildet, angeordneten Schneckengängen 40 gebildet, die somit einstückig mit der Schnecke 15 sind, jedoch eine im Vergleich zu dieser Schnecke 15 entgegengesetzte Steigungsrichtung aufweisen. Bei der Drehung der Schnecke 15 trachten daher diese Schneckengänge 40 das Material in Richtung zur Öffnung 13 des Gehäuses 14 zu fördem, also in entgegengesetzter Richtung zur Förderung der Schnecke 15. Die wesentlich größere axiale Länge der Schnecke 15 im Vergleich zur axialen Länge des Stauelementes 39 bewirkt jedoch, dass die Förderwirkung der Schneckengänge 40 von der Förderwirkung der Schnecke 15 überwunden wird, wobei erstere Förderwirkung jedoch den erhöhten Druck auf das Material im Bereich des Stauelementes 39 bewirkt. Das so weiter komprimierte Material wird somit entlang der Schneckengänge 40 in Richtung zur Mündung 20 des Kanales 18 gedrückt bzw. es wird das Material an den Schneckengängen 40 vorbei gedrückt, d.h. die Schneckengänge 40 werden gleichsam "überfahren", wenn diese Schneckengänge, wie in Fig. 3 dargestellt, einen geringeren Außendurchmesser aufweisen als die Schneckengänge 52 der Schnecke 15. Alternativ hiezu könnte - bei gleichem Außendurchmesser beider Schneckengangarten - der Innendurchmesser des Gehäuses 14 im Bereich des Stauelementes 39 entsprechend vergrößert sein, jedoch ist die zuvor erwähnte Variante aus baulichen Gründen vorzuziehen.

Es wäre möglich, den das Stauelement 39 bildenden Bauteil getrennt von der Schnecke 15 auszubilden und durch einen eigenen Antrieb zu verdrehen, etwa mittels einer axialen Stange, welche durch den als Hohlwelle ausgebildeten Kem der Schnecke 15 hindurchgeführt ist. Konstruktiv wesentlich weniger aufwendig ist es jedoch, das Stauelement 39 entweder einstückig mit der Schnecke 15 auszubilden oder zwar als von der Schnecke 15 getrennten Bauteil, der jedoch mit der Schnecke 15 drehschlüssig verbunden ist. Die letztere Variante hat den Vorteil, dass der besonders starken Beanspruchungen unterworfene Bauteil des Stauelementes 39 gesondert auswechselbar ist, insbesondere zwecks Wartung oder Ersatz. Um diese Arbeiten zu erleichtert, ist auch der das Stauelement 39 umschließende Abschnitt des Gehäuses 14 als gesonderter Bauteil 41 ausgebildet (Fig. 3), der mit dem restlichen Abschnitt des Gehäuses 14 lösbar, jedoch dicht verbunden ist. Die dichte Verbindung ist im Hinblick auf den angestrebten luftdichten Abschluss erforderlich und auch aus dem Grund, die im Kanal 18 auftretenden hohen Drücke (bis 300 bar und mehr) aufnehmen zu können, ohne dass es an der Anschlussstelle zu Undichtheiten kommt.

Wie Fig. 3 zeigt, ist das der Mündung 20 des Kanales 18 benachbarte Stirnende des Stauelementes 39 zugespitzt. Diese Zuspitzung 51 bewirkt einerseits eine Zusammenführung der im Bereich des Umfanges des Stauelementes 39 an diesem vorbeiströmenden Materialstränge und anderseits eine Angleichung an das Profil der Seitenwand 21 des Behälters 19. Dies hat den Vorteil, dass die zusammengebackten Teilchen in ihrer Größe klein gehalten werden und dass die Umlaufbewegung der durch die Werkzeuge angetriebenen Kunststoffmasse um die Behälterachse im Bereich der Mündung 20 möglichst wenig gestört wird.

Eine Variante hiezu ist in Fig. 4 dargestellt. Das Stauelement 39 ist hiebei von einem an die Schnecke 15 stimseitig angesetzten Bauteil 42 gebildet, der zwei quer zur Fließrichtung des geförderten Materiales angeordnete Rippen 43 hat, deren Profil abgerundet ist und deren größter Durchmesser etwas geringer ist als der Innendurchmesser des Gehäuses 14 bzw. des an ihn angeschlossenen Abschnittes 41. Auch ein solcher Staukörper 39 wirkt auf das an seinem Außenumfang vorbeiströmende Kunststoffmaterial hemmend ein und bewirkt über die dadurch hervorgerufene Verdichtung des Materiales einen vakuumdichten Abschluss. Die Zuspitzung 51 des Stauelementes 39 hat denselben Effekt wie er bei Fig. 3 beschrieben wurde.

Eine weitere Ausführungsvariante bestünde darin, als Staukörper 39 zumindest eine quer zur Achsrichtung der Schnecke 15 angeordnete Stauscheibe zu verwenden.

Wie Fig. 1 zeigt, liegt die Mündung 20 des Kanals in Abstand oberhalb der Umlaufbahn der Werkzeuge 22 im Behälter 19. Dadurch wird verhindert, dass ein aus der Mündung 20 des Kanales 18 austretendes Materialteilchen durch die umlaufenden Werkzeuge 22 unmittelbar in die Einzugsöffnung 32 des Gehäuses 31 der Ausbringeschnecke 30 gefördert wird, sodass das Teilchen nicht lange genug im Behälter 19 verbleibt, um für eine ausreichende Trocknung des Teilchens zu sorgen. Das aus der Mündung 20 austretende Teilchen wird vielmehr durch den an der Seitenwand 21 des Behälters 19 hochsteigenden Materialstrom erfasst und in das Innere des Behälters transportiert (siehe die Pfeile 44 in Fig. 1). Es kommt daher zu einer gewünschten Durchwirbelung der Teilchen im Behälter 19. Dies kann noch dadurch gesteigert werden, dass im Abstand oberhalb der Werkzeuge 22, vorzugsweise auf der Höhe der Mündung 20 des Kanals 18, weitere umlaufende Werkzeuge 45, vorzugsweise in Form von Schlagelementen, angeordnet sind, die von einer nach oben ragenden Verlängerung der Welle 25 über einen Trägerstem 46 angetrieben werden.

Auch das Gehäuse 14 der Schnecke 15 und/oder der Gehäusebauteil 41, welcher das Stauelement 39 aufnimmt, können mit Heizeinrichtungen 48, vorzugsweise in Form von Widerstandsheizungen, versehen sein. Hingegen empfiehlt es sich, die, hohen Beanspruchungen und daher einem Wärmeeinfluss unterworfene, Schnecke 15 sowie den an ihrem Stimende angeordneten, als Stauelement 39 ausgebildeten, Bauteil zu kühlen. Hiefür sind der Kern der Schnecke 15 und gegebenenfalls auch der Bauteil 42 mit einer mittigen Bohrung 49 ausgebildet (Fig. 3), in welche sich eine Kühlleitung 47 erstreckt Die Kühlung kann mittels eines Wärmeträgeröles, Kühlwasser oder Luft erfolgen. Durch eine Thermostatsteuerung dieser Kühlung und/oder der Heizungen 48, 37 lassen sich die gewünschten Temperaturen der Schnecken 15, 30, des Stauelementes 39 sowie des von diesen Bauteilen geförderten Materiales konstant halten.

Die Schnecke 30 am Ausgang des zweiten Aufnahmebehälters 19 kann eine Extruderschnecke sein, gegebenenfalls jedoch auch eine bloße Transportschnecke, welche das Material einer weiteren Bearbeitungsstelle oder einer Verwendungsstelle zuführt. Zweckmäßig sind im Gehäuse 31 dieser Schnecke 30 hier nicht dargestellte Entgasungsvorrichtungen vorgesehen.

Es ist besonders günstig, das Gehäuse 31 der Schnecke 30 tangential an den zweiten Aufnahmebehälter 19 anzuschließen, da auf diese Weise der Motor 36 und der die Austrittsöffnungen für das Material tragende Bauteil 50 (Fig. 2) an einander entgegengesetzten Stimenden des Gehäuses 31 angeordnet werden können. Dies vermeidet seitlich am Gehäuse 31 angeordnete Austrittsöffnungen, welche eine Umlenkung des Materiales und damit einen Energieverlust bedingen. Selbstverständlich kann jedoch, falls gewünscht, das Gehäuse 31 auch radial oder außermittig an den Aufnahmebehälter 19 angeschlossen sein und ebenso ist es möglich, den Anschluss des Gehäuses 14 der Schnecke 15 an den ersten Aufnahmebehälter 2 nicht, wie in Fig. 2 dargestellt, tangential auszubilden, sondern radial oder außermittig zum Behälter 2.

## Patentansprüche

1. Vorrichtung zum kontinuierlichen Recyclen von Kunststoffmaterial, vorzugsweise Polyester, mit einem ersten Aufnahmebehälter für das Material, in welchem das Material zerkleinernde und/oder mischende bewegte Werkzeuge angeordnet sind und aus welchem das so bearbeitete Material durch einen vakuumdicht abschließbaren Kanal in einen zweiten Aufnahmebehälter transportiert wird, dessen Innenraum an eine Evakuiereinrichtung angeschlossen ist und in welchem ebenfalls bewegte Werkzeuge für die Bearbeitung des Materials vorgesehen sind, wobei das Material aus dem zweiten Aufnahmebehälter mittels einer Schnecke abtransportiert wird, **dadurch gekennzeichnet, dass** im Kanal (18) eine Schnecke (15) gelagert ist, deren Schneckengänge (52) das Material aus dem ersten Aufnahmebehälter (2) in den zweiten Aufnahmebehälter (19) fördern, wobei zwischen diesen Schneckengängen (52) und dem zweiten Aufnahmebehälter (19) zumindest ein im Fluss des geförderten Materiales liegendes Stauelement (39) im Kanal (18) vorhanden ist.

2. Vorrichtung nach Anspruch 1, **dadurch gekennzeichnet, dass** die Schnecke (15) eine Agglomerierschnecke ist.

3. Vorrichtung nach Anspruch 1 oder 2, **dadurch gekennzeichnet, dass** das Stauelement (39) von Schneckengängen (40) gebildet ist, deren Steigungsrichtung jenen der Schneckengänge (52) der Schnecke (15) entgegengesetzt gerichtet ist.

4. Vorrichtung nach Anspruch 3, **dadurch gekennzeichnet, dass** in axialer Richtung des Kanals (18) gemessen, die Schnecke (15) länger ist als die entgegengesetzt gerichteten Schneckengänge (40) und/oder dass die Schneckengänge (52) der Schnecke (15) tiefer geschnitten sind als die entgegengesetzt gerichteten Schneckengänge (40) und/oder dass die Schneckengänge (40) des Stauelementes (39) einen geringeren Außendurchmesser aufweisen als die Schneckengänge (52) der Schnecke (15).

5. Vorrichtung nach Anspruch 1 oder 2, **dadurch gekennzeichnet, dass** das Stauelement (39) von zumindest einer quer, vorzugsweise normal, zur Fließrichtung des Materiales angeordneten Rippe (43) gebildet ist.

6. Vorrichtung nach Anspruch 5, **dadurch gekennzeichnet, dass** zumindest eine Rippe (43) ein abgerundetes Profil hat.

7. Vorrichtung nach einem der Ansprüche 1 bis 6, **dadurch gekennzeichnet, dass** das Stauelement (39) an einem gesonderten Bauteil (42) vorgesehen ist, der drehschlüssig mit der Schnecke (15) verbunden ist.

8. Vorrichtung nach einem der Ansprüche 1 bis 7, **dadurch gekennzeichnet, dass** das Stauelement (39) an seinem dem zweiten Aufnahmebehälter (19) benachbarten Stimende eine Zuspitzung (51) hat.

9. Vorrichtung nach einem der Ansprüche 1 bis 8, **dadurch gekennzeichnet, dass** der Kanal (18) außermittig, gegebenenfalls tangential, an die Seitenwand (21) des zweiten Aufnahmebehälters (19) angeschlossen ist.

10. Vorrichtung nach den Ansprüchen 8 und 9, **dadurch gekennzeichnet, dass** das Profil der Zuspitzung (51) des Stauelementes (39) im wesentlichen dem Profil der Seitenwand (21) des zweiten Aufnahmebehälters (19) im Bereich des Anschlusses des Kanales (18) folgt.

11. Vorrichtung nach einem der Ansprüche 1 bis 10, **dadurch gekennzeichnet, dass** das Stauelement (39) in einem einen eigenen Abschnitt des Kanales (18) bildenden Gehäusebauteil (41) angeordnet ist, der mit dem Gehäuse (14) der Schnecke (15) lösbar, jedoch dicht, verbunden ist.

12. Vorrichtung nach einem der Ansprüche 1 bis 11, **dadurch gekennzeichnet, dass** die Gangtiefe der Schneckengänge (52) der Schnecke (15) größer ist als die in radialer Richtung gemessene kleinste Abmessung des Spaltes zwischen dem Umfang der Rippen (43) des Stauelementes (39) und der Innenwand des Kanales (18).

13. Vorrichtung nach einem der Ansprüche 1 bis 12, **dadurch gekennzeichnet, dass** auch der erste Aufnahmebehälter (2) dicht abschließbar und an eine Evakuiereinrichtung (6) angeschlossen ist.

14. Vorrichtung nach einem der Ansprüche 1 bis 13, **dadurch gekennzeichnet, dass** die Einzugsöffnung (32) eines Gehäuses der das Material aus dem zweiten Aufnahmebehälter (19) abtransportierenden Schnecke (30) zumindest annähernd auf der Höhe der in diesem Aufnahmebehälter (19) umlaufenden Werkzeuge (22) liegt.

15. Vorrichtung nach einem der Ansprüche 1 bis 14, **dadurch gekennzeichnet, dass** die Mündung (20) des Kanales (18) in den zweiten Aufnahmebehälter (19) höher liegt als die Umlaufbahn im Bodenbereich dieses Aufnahmebehälters (19) um zumindest eine vertikale Achse umlaufender Werkzeuge (22).

16. Vorrichtung nach Anspruch 15, **dadurch gekennzeichnet, dass** zusätzlich zu den im Bodenbereich des zweiten Aufnahmebehälters (19) umlaufenden Werkzeugen (22) weitere, vorzugsweise gleichachsig angeordnete, Werkzeuge (45), insbesondere Schlagelemente, vorgesehen sind, deren Umlaufbahn höher liegt als jene der im Bodenbereich des Aufnahmebehälters (19) angeordneten Werkzeuge (22).

17. Vorrichtung nach Anspruch 16, **dadurch gekennzeichnet, dass** die Umlaufbahn der weiteren Werkzeuge (45) auf der Höhe der Mündung (20) des Kanales (18) in den zweiten Aufnahmebehälter (19) liegt.

18. Vorrichtung nach einem der Ansprüche 1 bis 17, **dadurch gekennzeichnet, dass** in der Schnecke (15) und/oder im Stauelement (39) zumindest eine Kühlleitung (47) vorgesehen ist.

19. Vorrichtung nach einem der Ansprüche 1 bis 18, **dadurch gekennzeichnet, dass** am und/oder im Gehäuse (14, 41) der Schnecke (15) und/oder des Stauelementes (39) zumindest eine Heizeinrichtung (37, 48), insbesondere Widerstandsheizungen, vorgesehen sind.

20. Vorrichtung nach einem der Ansprüche 1 bis 19, **dadurch gekennzeichnet, dass** das Gehäuse (31) der das Material aus dem zweiten Aufnahmebehälter (19) abtransportierenden Schnecke (30) tangential an diesen Aufnahmebehälter (19) angeschlossen ist.

## Claims

1. An installation for continuously recycling plastics material, preferably polyester, comprising a first receiving container for the material, in which moving implements comminuting and/or mixing the material are arranged and from which the thus processed material is conveyed through a vacuum-sealable channel into a second receiving container, the interior of which is connected to an evacuating device and in which moving implements are likewise provided for processing the material, wherein the material is conveyed away from the second receiving container by means of a screw, **characterised in that** a screw (15) is mounted in the channel (18) and its threads (52) convey the material from the first receiving container (2) into the second receiving container (19), at least one baffle element (39) being provided in the channel (18) between these screw threads (52) and the second receiving container (19) and lying in the flow path of the conveyed material.

2. An installation according to claim 1, **characterised in that** the screw (15) is an agglomerating screw.

3. An installation according to claim 1 or 2, **characterised in that** the baffle element (39) is formed by screw threads (40), the helix direction of which is opposite that of the threads (52) of the screw (15).

4. An installation according to claim 3, **characterised in that**, measured in the axial direction of the channel (18), the screw (15) is longer than the opposing screw threads (40) and/or **in that** the threads (52) of the screw (15) are cut more deeply than the opposing screw threads (40) and/or **in that** the screw threads (40) of the baffle element (39) have a smaller outer diameter than the threads (52) of the screw (15).

5. An installation according to claim 1 or 2, **characterised in that** the baffle element (39) is formed by at least one rib (43) arranged transversely, preferably perpendicularly, to the flow direction of the material.

6. An installation according to claim 5, **characterised in that** at least one rib (43) has a rounded profile.

7. An installation according to any one of claims 1 to 6, **characterised in that** the baffle element (39) is provided on a separate component (42) connected to the screw (15) in a rotationally locked manner.

8. An installation according to any one of claims 1 to 7, **characterised in that** the baffle element (39) has a taper (51) at its end adjacent to the second receiving container (19).

9. An installation according to any one of claims 1 to 8, **characterised in that** the channel (18) is connected eccentrically, optionally tangentially, to the side wall (21) of the second receiving container (19).

10. An installation according to claims 8 and 9, **characterised in that** the profile of the taper (51) of the baffle element (39) substantially conforms to the profile of the side wall (21) of the second receiving container (10) in the region of the connection of the channel (18).

11. An installation according to any one of claims 1 to 10, **characterised in that** the baffle element (39) is arranged in a housing part (41) forming a separate portion of the channel (18) and connected to the housing (14) of the screw (15) in a detachable, but sealed manner.

12. An installation according to any one of claims 1 to 11, **characterised in that** the depth of the threads (52) of the screw (15) is greater than the radially smallest dimension of the gap between the circumference of the ribs (43) of the baffle element (39) and the inner wall of the channel (18).

13. An installation according to any one of claims 1 to 12, **characterised in that** the first receiving container (2) is also sealable and connected to an evacuating device (6).

14. An installation according to any one of claims 1 to 13, **characterised in that** the feed opening (32) of a housing of the screw (30) conveying the material out of the second receiving container (19) is arranged at least approximately at the level of the implements (22) rotating in this receiving container (19).

15. An installation according to any one of claims 1 to 14, **characterised in that** the opening (20) of the channel (18) into the second receiving container (19) is arranged higher than the circular path of implements (22) rotating about at least one vertical axis in the base region of this receiving container (19).

16. An installation according to claim 15, **characterised in that**, in addition to the implements (22) rotating in the base region of the second receiving container (19), further, preferably co-axially arranged implements (45), in particular impactors, are provided, the circular path of which is arranged higher than that of the implements (22) arranged in the base region of the receiving container (19).

17. An installation according to claim 16, **characterised in that** the circular path of the further implements (45) is arranged at the level of the opening (20) of the channel (18) into the second receiving container (19).

18. An installation according to any one of claims 1 to 17, **characterised in that** at least one cooling line (47) is provided in the screw (15) and/or in the baffle element (39).

19. An installation according to any one of claims 1 to 18, **characterised in that** at least one heating device (37, 48), in particular resistance heaters, are provided on and/or in the housing (14, 41) of the screw (15) and/or of the baffle element (39).

20. An installation according to any one of claims 1 to 19, **characterised in that** the housing (31) of the screw (30) conveying the material out of the second receiving container (19) is connected tangentially to this receiving container (19).

## Revendications

1. Dispositif de recyclage continu de matière plastique, de préférence de polyester, avec une première chambre de réception de la matière, dans laquelle sont agencés des outils mobiles destinés à broyer et/ou mélanger la matière et hors de laquelle la matière ainsi travaillée est évacuée, via un canal obturable étanche au vide, en direction d'une deuxième chambre de réception dont l'intérieur est raccordé à un dispositif de vide et dans laquelle sont également prévus des outils mobiles de traitement de la matière, ladite matière étant évacuée de la deuxième chambre au moyen d'une vis sans fin, **caractérisé en ce que** dans le canal (18) est logée une vis sans fin (15), dont les filets (52) transportent la matière de la première chambre (2) jusque dans la deuxième chambre (19), le canal (18) contenant, entre ces filets (52) et la deuxième chambre (19), au moins un élément de retenue (39) situé dans l'écoulement de la matière refoulée.

2. Dispositif selon la revendication 1, **caractérisé en ce que** la vis sans fin (15) est une vis d'agglomération.

3. Dispositif selon la revendication 1 ou 2, caraçtérisé en ce que l'élément de retenue (39) est formé par des filets (40) dont le sens est inverse à celui des filets (52) de la vis sans fin (15).

4. Dispositif selon la revendication 3, **caractérisé en ce que**, mesurée dans la direction axiale du canal (18), la vis sans fin (15) est plus longue que les filets orientés en sens inverse (40) et/ou **en ce que** les filets (52) de la vis sans fin (15) sont plus profonds que les filets orientés en sens inverse (40) et/ou **en ce que** les filets (40) de l'élément de retenue (39) présentent un plus petit diamètre externe que les filets (52) de la vis sans fin (15).

5. Dispositif selon la revendication 1 ou 2, **caractérisé en ce que** l'élément de retenue (39) est formé par au moins une nervure (43) agencée transversalement, de préférence perpendiculairement, à la direction d'écoulement de la matière.

6. Dispositif selon la revendication 5, **caractérisé en ce qu'**une nervure (43) au moins présente un profil arrondi.

7. Dispositif selon l'une des revendications 1 à 6, **caractérisé en ce que** l'élément de retenue (39) est prévu sur un composant indépendant (42), relié solidaire en rotation à la vis sans fin (15).

8. Dispositif selon l'une des revendications 1 à 7, **caractérisé en ce que** l'élément de retenue (39) présente un effilement (51) à son extrémité frontale voisine de la deuxième chambre (19).

9. Dispositif selon l'une des revendications 1 à 8, **caractérisé en ce que** le canal (18) est raccordé de manière excentrée, éventuellement tangentielle, à la paroi latérale (21) de la deuxième chambre (19).

10. Dispositif selon les revendications 8 et 9, **caractérisé en ce que** le profil de l'effilement (51) de l'élément de retenue (39) suit sensiblement le profil de la paroi latérale (21) de la deuxième chambre (19) au niveau du raccordement du canal (18).

11. Dispositif selon l'une des revendications 1 à 10, **caractérisé en ce que** l'élément de retenue (39) est agencé dans un élément de carter (41) formant une portion du canal (18) et relié au carter (14) de la vis sans fin (15) de manière amovible mais étanche.

12. Dispositif selon l'une des revendications 1 à 11, **caractérisé en ce que** la profondeur des filets (52) de la vis sans fin (15) est supérieure à la plus petite dimension, mesurée dans la direction radiale, de l'interstice entre la périphérie des nervures (43) de l'élément de retenue (39) et la paroi interne du canal (18).

13. Dispositif selon l'une des revendications 1 à 12, **caractérisé en ce que** la première chambre (2) est également obturable de manière étanche et raccordée à un dispositif de vide (6).

14. Dispositif selon l'une des revendications 1 à 13, **caractérisé en ce que** l'ouverture d'admission (32) d'un carter de la vis sans fin (30) évacuant la matière de la deuxième chambre (19) est agencée au moins approximativement à hauteur des outils (22) tournant dans cette chambre (19).

15. Dispositif selon l'une des revendications 1 à 14, **caractérisé en ce que** l'embouchure (20) du canal (18) dans la deuxième chambre (19) est agencée plus haut que l'orbite d'outils (22) tournant autour d'au moins un axe vertical dans le fond de cette chambre (19).

16. Dispositif selon la revendication 15, **caractérisé en ce qu'**en plus des outils (22) tournant dans le fond de la deuxième chambre (19), il est prévu d'autres outils (45), de préférence sur le même axe, en particulier des éléments de battage, dont l'orbite est située plus haut que celle des outils (22) agencés dans le fond de la chambre (19).

17. Dispositif selon la revendication 16, **caractérisé en ce que** l'orbite des autres outils (45) est située à hauteur de l'embouchure (20) du canal (18) dans la deuxième chambre (19).

18. Dispositif selon l'une des revendications 1 à 17, **caractérisé en ce qu'**au moins une conduite de refroidissement (47) est prévue dans la vis sans fin (15) et/ou dans l'élément de retenue (39).

19. Dispositif selon l'une des revendications 1 à 18, **caractérisé en ce qu'**au moins un dispositif de chauffage (37, 48), en particulier des chauffages ohmiques, est prévu sur et/ou dans le carter (14, 41) de la vis sans fin (15) et/ou de l'élément de retenue (39).

20. Dispositif selon l'une des revendications 1 à 19, **caractérisé en ce que** le carter (31) de la vis sans fin (30) évacuant la matière de la deuxième chambre (19) est raccordé tangentiellement à ladite deuxième chambre (19).
